# EUROPÄISCHE PATENTANMELDUNG

(11) **EP 1 312 651 A2**
(43) Veröffentlichungstag der Anmeldung: **21.05.2003**
(21) Anmeldenummer: 03003629.7
(22) Anmeldetag: 27.10.2000
(51) Int. Cl.: C09B 62/513, C09B 62/09

(54) **Reaktivfarbstoffe, Verfahren zu deren Herstellung und deren Verwendung**

(30) Priorität: 05.11.1999 EP 99811015
(62) Teilanmeldung aus: 00811000.9
(71) Anmelder: Ciba Specialty Chemicals Holding Inc., 4057 Basel (CH)
(72) Erfinder: Tzikas, Athanassios, 4133 Pratteln (CH); Deitz, Rolf, (DE); Klier, Herbert, 79588 Efringen-Kirchen (DE)

(57) **Zusammenfassung**

Reaktivfarbstoffe der Formel (1a) 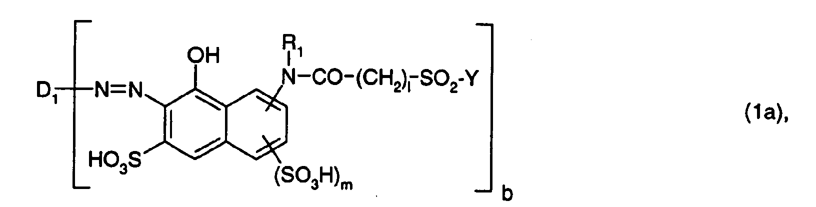 worin
b die Zahl 2 ist,
D₁ gegebenenfalls durch C₁-C₄-Alkyl, C₁-C₄-Alkoxy, C₂-C₄-Alkanoylamino, Sulfo, Halogen oder Carboxy substituiertes Phenylen oder Naphthylen oder ein Rest der Formel (13) 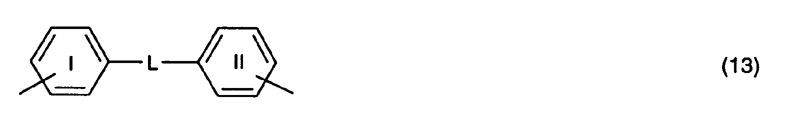 ist, worin die Benzolringe I und II gegebenenfalls durch C₁-C₄-Alkyl, C₁-C₄-Alkoxy, C₂-C₄-Alkanoylamino, Sulfo, Halogen oder Carboxy substituiert sind und L ein C₁-C₁₀-Alkylenrest ist, welcher durch 1, 2 oder 3 Sauerstoffatome unterbrochen sein kann, oder L ein Brückenglied der Formel 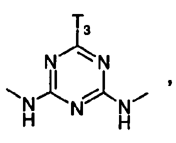 -CH=CH-, -N=N-, -NH-, -CO-, -NH-CO-, -NH-SO₂-, -NH-CO-NH-, -O-, -S- oder -SO₂- ist und T₃ für Halogen oder für einen nicht faserreaktiven Substituenten steht, oder
D₁ einen Rest der Formel (14) 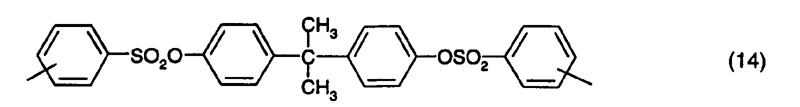 bedeutet,
R₁ Wasserstoff oder C₁-C₄-Alkyl ist,
Y Vinyl oder einen Rest -CH₂-CH₂-U bedeutet und U eine alkalisch abspaltbare Gruppe ist,
I die Zahl 2, 3, 4, 5 oder 6 bedeutet, und
m die Zahl 0 oder 1 ist.

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe, für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen Farbstoffen die gestellte Aufgabe weitgehend gelöst wird.

Gegenstand der vorliegenden Erfindung sind daher Reaktivfarbstoffe der Formel (1a) 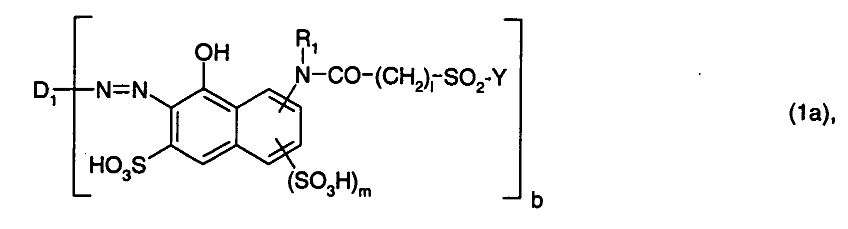 worin
b die Zahl 2 ist,
D₁ gegebenenfalls durch C₁-C₄-Alkyl, C₁-C₄-Alkoxy, C₂-C₄-Alkanoylamino, Sulfo, Halogen oder Carboxy substituiertes Phenylen oder Naphthylen oder ein Rest der Formel (13) 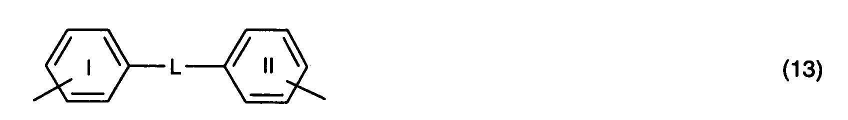 ist, worin die Benzolringe I und II gegebenenfalls durch C₁-C₄-Alkyl, C₁-C₄-Alkoxy, C₂-C₄-Alkanoylamino, Sulfo, Halogen oder Carboxy substituiert sind und L ein C₁-C₁₀-Alkylenrest ist, welcher durch 1, 2 oder 3 Sauerstoffatome unterbrochen sein kann, oder L ein Brückenglied der Formel 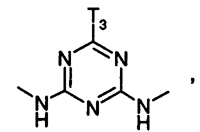 -CH=CH-, -N=N-, -NH-, -CO-, -NH-CO-, -NH-SO₂-, -NH-CO-NH-, -O-, -S- oder -SO₂- ist und T₃ für Halogen oder für einen nicht faserreaktiven Substituenten steht, oder
D₁ einen Rest der Formel (14) 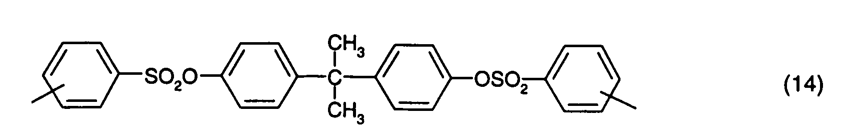 bedeutet,
R₁ Wasserstoff oder C₁-C₄-Alkyl ist,
Y Vinyl oder einen Rest -CH₂-CH₂-U bedeutet und U eine alkalisch abspaltbare Gruppe ist,
I die Zahl 2, 3, 4, 5 oder 6 bedeutet, und
m die Zahl 0 oder 1 ist.

Der Rest R₁ ist als Alkylrest geradkettig oder verzweigt. Als Beispiele seien die folgenden Reste genannt: Methyl, Ethyl, Propyl, Isopropyl, Butyl, Isobutyl, sek.-Butyl oder tert.-Butyl.

Bevorzugt ist R₁ Wasserstoff oder Methyl und ganz besonders Wasserstoff.

Als alkalisch abspaltbare Gruppe U kommt z.B. -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ in Betracht. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H.

Beispiele für geeignete Reste Y sind dementsprechend Vinyl, β-Brom- oder β-Chlorethyl, β-Acetoxyethyl, β-Benzoyloxyethyl, β-Phosphatoethyl, β-Sulfatoethyl und β-Thiosulfatoethyl. Y steht bevorzugt für Vinyl, β-Chlorethyl oder β-Sulfatoethyl.

I steht bevorzugt für die Zahl 3 oder 4 und insbesondere 3.

Vorzugsweise bedeutet m die Zahl 1.

Als Substituenten von D₁ seien die folgenden genannt: C₁-C₄-Alkyl, worunter z.B. Methyl, Ethyl, n- oder iso-Propyl, n-, iso-, sec.- oder tert.-Butyl zu verstehen ist; C₁-C₄-Alkoxy, worunter z.B. Methoxy, Ethoxy, n- oder iso-Propoxy oder n-, iso-, sec.- oder tert.-Butoxy zu verstehen ist; C₂-C₄-Alkanoylamino, wie z.B. Acetylamino oder Propionylamino zu verstehen ist; Halogen, worunter z.B. Fluor, Brom oder insbesondere Chlor zu verstehen ist.

Für einen nicht-faserreaktiven Substituenten T₃ kommen z.B. die folgenden Reste in Betracht:
Hydroxy;
C₁-C₄-Alkoxy, wie beispielsweise Methoxy, Ethoxy, n- oder Isopropoxy, n-, sec.-, iso- oder tert.-Butoxy, insbesondere Methoxy oder Ethoxy; die genannten Reste sind unsubstituiert oder im Alkylteil substituiert, z.B. durch C₁-C₄-Alkoxy, Hydroxy, Sulfo oder Carboxy;
C₁-C₄-Alkylthio, wie beispielsweise Methylthio, Ethylthio, n- oder Isopropylthio oder n-Butylthio; die genannten Reste sind unsubstituiert oder im Alkylteil substituiert, z.B. durch C₁-C₄-Alkoxy, Hydroxy, Sulfo oder Carboxy;
Amino;
N-Mono- oder N,N-Di-C₁-C₆-Alkylamino, vorzugsweise N-Mono- oder N,N-Di-C₁-C₄-Alkylamino; die genannten Reste sind unsubstituiert, gegebenenfalls im Alkylteil durch Sauerstoff unterbrochen oder im Alkylteil substituiert, z.B. durch C₂-C₄-Alkanoylamino, C₁-C₄-Alkoxy, Hydroxy, Sulfo, Sulfato, Carboxy, Cyano, Carbamoyl oder Sulfamoyl; als Beispiele seien N-Methylamino, N-Ethylamino, N-Propylamino, N,N-Di-Methylamino oder N,N-Di-Ethylamino, N-β-Hydroxyethylamino, N,N-Di-β-Hydroxyethylamino, N-2-(β-Hydroxyethoxy)ethylamino, N-2-[2-(β-Hydroxyethoxy)ethoxy]ethylamino, N-β-Sulfatoethylamino, N-β-Sulfoethylamino, N-Carboxymethylamino, N-β-Carboxy-ethylamino, N-α,β-Dicarboxyethylamino, N-α,γ-Dicarboxypropylamino, N-Ethyl-N-β-Hydroxyethylamino oder N-Methyl-N-β-Hydroxyethylamino genannt;
C₅-C₇-Cycloalkylamino, wie z.B. Cyclohexylamino, welches sowohl die unsubstituierten wie auch die im Cycloalkylring z.B. durch C₁-C₄-Alkyl, insbesondere Methyl, oder Carboxyl substituierten Reste umfasst;
Phenylamino oder N-C₁-C₄-Alkyl-N-phenylamino, welches sowohl die unsubstituierten wie auch die im Phenylring z.B. durch C₁-C₄-Alkyl, C₁-C₄-Alkoxy, C₂-C₄-Alkanoylamino, Carboxy, Carbamoyl, Sulfo oder Halogen substituierten Reste umfasst, wie beispielsweise 2-, 3- oder 4-Chlorphenylamino, 2-, 3- oder 4-Methylphenylamino, 2-, 3- oder 4-Methoxyphenylamino, 2-, 3- oder 4-Sulfophenylamino, Disulfophenylamino oder 2-, 3- oder 4-Carboxyphenylamino;
gegebenenfalls im Naphthylring z.B. durch Sulfo substituiertes Naphthylamino, vorzugsweise die durch 1 bis 3 Sulfogruppen substituierten Reste, wie beispielsweise 1- oder 2-Naphthylamino, 1-Sulfo-2-naphthylamino, 1,5-Disulfo-2-naphthylamino oder 4,8-Disulfo-2-naphthylamino; oder
gegebenenfalls im Phenylteil z.B. durch C₁-C₄-Alkyl, C₁-C₄-Alkoxy, Carboxy; Sulfo oder Halogen substituiertes Benzylamino.

Als nicht-faserreaktiver Rest hat T₃ vorzugsweise die Bedeutung C₁-C₄-Alkoxy, C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Acetylamino, Chlor, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist oder gegebenenfalls durch 1 bis 3 Sulfogruppen substituiertes Naphthylamino.

Besonders bevorzugte nicht-faserreaktive Reste T₃ sind Amino, N-Methylamino, N-Ethylamino, N-β-Hydroxyethylamino, N-Methyl-N-β-Hydroxyethylamino, N-Ethyl-N-β-Hydroxyethylamino, N,N-Di-β-Hydroxyethylamino, Morpholino, 2-, 3- oder 4-Carboxyphenylamino, 2-, 3- oder 4-Sulfophenylamino oder N-C₁-C₄-Alkyl-N-phenylamino.

T₃ als Halogen ist z.B. Chlor oder Fluor, vorugsweise Chlor.

L als C₁-C₁₀-Alkylenrest, vorzugsweise C₂-C₆-Alkylenrest, ist geradkettig oder verzweigt oder ein C₅-C₆-Cycloalkylenrest und vorzugsweise nicht durch Sauerstoffatome unterbrochen. L als C₁-C₁₀-Alkylenrest ist insbesondere ein C₂-C₄-Alkylenrest.

Bevorzugt ist D₁ als aromatische Tetrazokomponente ein durch 1 bis 3, vorzugsweise 2 Sulfogruppen, substituiertes Naphthylen, ein Rest der Formel (13), worin die Benzolringe I und II gegebenenfalls durch 1 oder 2 Substituenten aus der Gruppe Sulfo, Carboxy, Methyl und Methoxy substituiert sind und L ein C₂-C₄-Alkylenrest oder ein Brückenglied der Formel -CH=CH-, -N=N-, -NH-, -CO-, -NH-CO-, -NH-SO₂-, -NH-CO-NH-, -O-, -S- oder -SO₂-, insbesondere ein C₂-C₄-Alkylenrest oder ein Brückenglied der Formel -CH=CH-, -N=N- oder -NH-CO- ist; oder D₁ ist ein Rest der Formel (14).

Einen weiteren Gegenstand der vorliegenden Erfindung betrifft ein Verfahren zur Herstellung der erfindungsgemässen Reaktivfarbstoffe, dadurch gekennzeichnet, dass man in etwa ein Moläquivalent eines tetrazotierten Diamins der Formel (18)

H₂N-D₁-NH₂ (18)

auf in etwa zwei Moläquivalente einer Verbindung der Formel (17) 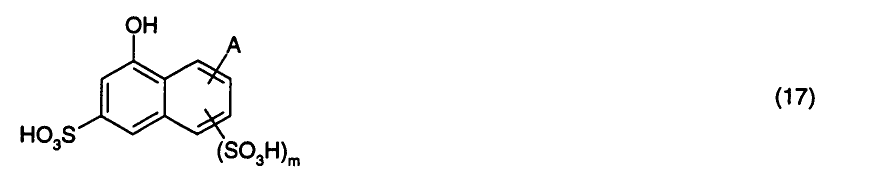 kuppelt, wobei für
D₁ und m die oben angegebenen Bedeutungen und Bevorzugungen gelten und A den Rest der Formel (2) 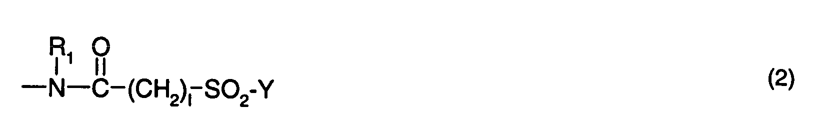 bedeutet.

Es wird ein Reaktivfarbstoff der Formel (1a) erhalten, worin b die Zahl 2 bedeutet. Gegebenenfalls kann auch eine Mischung aus zwei verschiedenen Verbindungen der Formel (17), z.B. eine 1:1-Mischung, die sich voneinander durch die Zahl m, der Position des Rests A oder der Position der Sulfogruppe unterscheiden, verwendet werden.

Die Tetrazotierung der Diamine der Formel (18) erfolgt z.B. mit einem Nitrit, z.B. mit einem Alkalimetallnitrit wie Natriumnitrit, in einem sauren Medium, z.B. in einem salzsauren Medium, bei Temperaturen von beispielsweise -5 bis 40°C und vorzugsweise bei -5 bis 25°C.

Die Kupplung auf die Kupplungskomponente der Formel (17) erfolgt in an sich bekannter Weise, bei sauren, neutralen bis schwach alkalischen pH-Werten, z.B. einem pH-Wert von 1 bis 10, und Temperaturen von beispielsweise -5 bis 60°C, vorzugsweise 0 bis 30°C.

Verbindungen der Formel (17) sind beschrieben, beispielsweise in der GB-A-1,155,149.

Die Verbindung der Formel (18) ist bekannt oder kann in an sich bekannter Weise erhalten werden.

Die erfindungsgemässen Reaktivfarbstoffe eignen sich zum Färben und Bedrucken der verschiedensten Materialien, insbesondere hydroxylgruppenhaltigen oder stickstoffhaltigen Fasermaterialien sowie Papier und Leder. Beispiele sind Seide, Wolle, Polyamidfasern und Polyurethane sowie insbesondere cellulosehaltige Fasermaterialien aller Art. Solche Fasermaterialien sind beispielsweise die natürliche Cellulosefaser, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Einen weiteren Gegenstand der vorliegenden Erfindung stellt somit die Verwendung von Verbindungen der Formel (1a) zum Färben oder Bedrucken von hydroxylgruppenhaltigen oder stickstoffhaltigen, insbesondere baumwollhaltigen Fasermaterialien dar.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Reaktivfarbstoffen hergestellten Färbungen und Drucke besitzen eine hohe Farbstärke, eine hohe Farbbrillanz und eine hohe Faser-Farbstoff-Bindungsstabilität, sowohl in saurem als auch in alkalischem Bereich. Hervorzuheben sind weiterhin die gute Lichtechtheit und die guten Nassechtheitseigenschaften, wie Wasch-, Wasser-, Seewasser-, Überfärbe- und Schweissechtheiten. Es werden faser- und flächenegale Färbungen erhalten.

Gegenstand der vorliegenden Erfindung sind weiterhin wässrige Tinten, dadurch gekennzeichnet, dass sie einen Reaktivfarbstoff der Formel (1a) enthalten, wobei für die Variablen die oben angegebenen Bedeutungen und Bevorzugungen gelten.

Die in den Tinten verwendeten Farbstoffe sollten vorzugsweise salzarm sein, d.h. einen Gesamtgehalt an Salzen von weniger als 0,5 Gew.-%, bezogen auf das Gewicht der Farbstoffe, enthalten. Farbstoffe, die, bedingt durch ihre Herstellung und/oder die nachträgliche Zugabe von Coupagemitteln grössere Salzgehalte aufweisen, können z.B. durch Membrantrennverfahren, wie Ultrafiltration, Umkehrosmose oder Dialyse, entsalzt werden.

Die Tinten enthalten bevorzugt einen Gesamtgehalt an Farbstoffen von 1 bis 35 Gew.-%, insbesondere 1 bis 30 Gew.-% und vorzugsweise 1 bis 20 Gew.-%, bezogen auf das Gesamtgewicht der Tinte. Als untere Grenze ist hierbei eine Grenze von 1,5 Gew.-%, vorzugsweise 2 Gew.-% und insbesondere 3 Gew.-%, bevorzugt.

Die Tinten können mit Wasser mischbare organische Lösungsmittel enthalten, beispielsweise C₁-C₄-Alkohole, wie z.B. Methanol, Ethanol, n-Propanol, Isopropanol, n-Butanol, sec.-Butanol, tert.-Butanol oder Isobutanol; Amide, wie z.B. Dimethylformamid oder Dimethylacetamid; Ketone oder Ketonalkohole, wie z.B. Aceton, Diacetonalkohol; Ether wie z.B. Tetrahydrofuran oder Dioxan; Stickstoff enthaltende heterocyclische Verbindungen, wie z.B. N-Methyl-2-pyrrolidon oder 1,3-Dimethyl-2-imidazolidon, Polyalkylenglykole, wie z.B. Polyethylenglykol, oder Polypropylenglykol; C₂-C₆-Alkylenglykole und Thioglykole, wie z.B. Ethylenglykol, Propylenglykol, Butylenglykol, Triethylenglykol, Thiodiglykol, Hexylenglykol und Diethylenglykol; weitere Polyole, wie z.B. Glycerin oder 1,2,6-Hexantriol; und C₁-C₄-Alkylether von mehrwertigen Alkoholen, wie z.B. 2-Methoxyethanol, 2-(2-Methoxyethoxy)ethanol, 2-(2-Ethoxyethoxy)ethanol, 2-[2-(2-Methoxyethoxy)ethoxy]-ethanol oder 2-[2-(2-Ethoxyethoxy)ethoxy]ethanol; bevorzugt N-Methyl-2-pyrrolidon, Diethylenglykol, Glycerin oder insbesondere 1,2-Propylenglykol, üblicherweise in einer Menge von 2 bis 30 Gew.-%, insbesondere 5 bis 30 Gew.-% und vorzugsweise 10 bis 25 Gew.-%, bezogen auf das Gesamtgewicht der Tinte.

Weiterhin können die Tinten noch Lösungsvermittler, wie z.B. ε-Caprolactam, enthalten.

Die Tinten können, u.a. zwecks Einstellung der Viskosität, Verdickungsmittel natürlicher oder synthetischer Herkunft enthalten.

Als Beispiele für Verdickungsmittel seien handelsübliche Alginatverdickungen, Stärkeether oder Johannisbrotkernmehlether, insbesondere Natriumalginat für sich allein oder im Gemisch mit modifizierter Cellulose, wie z.B. Methyl-, Ethyl-, Carboxymethyl-, Hydroxyethyl-, Methylhydroxyethyl-, Hydroxypropyl- oder Hydroxypropylmethylcellulose, insbesondere mit vorzugsweise 20 bis 25 Gewichtsprozent Carboxymethylcellulose, genannt. Als synthetische Verdickungsmittel seien ferner z.B. solche auf Basis von Poly(meth)acrylsäuren oder Poly(meth)acrylamiden genannt.

Die Tinten enthalten solche Verdickungsmittel z.B. in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte.

Ferner können die Tinten Puffersubstanzen enthalten, wie z.B. Borax, Borat, Phosphat, Polyphosphat oder Citrat. Als Beispiele seien Borax, Natriumborat, Natriumtetraborat, Natriumdihydrogenphosphat, Dinatriumhydrogenphosphat, Natriumtripolyphosphat, Natriumpentapolyphosphat sowie Natriumcitrat genannt. Sie werden insbesondere in Mengen von 0,1 bis 3 Gew.-%, vorzugsweise 0,1 bis 1 Gew.-%, bezogen auf das Gesamtgewicht der Tinte, verwendet, um einen pH-Wert von z.B. 4 bis 9, insbesondere 5 bis 8,5, einzustellen.

Als weitere Zusätze können die Tinten Tenside oder Feuchthaltemittel enthalten.

Als Tenside kommen die handelsüblichen anionischen oder nichtionogenen Tenside in Betracht. Als Feuchthaltemittel kommen z.B. Harnstoff oder eine Mischung von Na-Lactat (vorteilhafterweise in Form einer 50 bis 60%-igen wässrigen Lösung) und Glycerin und/oder Propylenglykol in Mengen von vorzugsweise 0,1 bis 30 Gew.-%, insbesondere 2 bis 30 Gew.-%, in den erfindungsgemässen Tinten in Betracht.

Bevorzugt sind Tinten, welche eine Viskosität von 1 bis 40 mPa·s, insbesondere 1 bis 20 mPa·s und vorzugsweise 1 bis 10 mPa·s aufweisen.

Weiterhin können die Tinten noch übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Die Tinten können in üblicher Weise durch Mischen der einzelnen Bestandteile in der gewünschten Menge Wasser hergestellt werden.

Die erfindungsgemässen Tinten sind insbesondere für die Verwendung in Aufzeichnungssystemen solcher Art geeignet, bei welchen eine Tinte aus einer kleinen Öffnung in Form von Tröpfchen ausgepresst wird, welche gegen ein Substrat gerichtet werden, auf welchem ein Bild entsteht. Geeignete Substrate sind z.B. Papier, textile Fasermaterialien oder Kunststoff-Folien. Geeignete Aufzeichnungssysteme sind z.B. handelsübliche Tintenstrahldrucker für die Anwendung im Papier- oder Textildruck, oder Schreibgeräte wie Füllfederhalter oder Kugelschreiber und insbesondere Tintenstrahldrucker.

Je nach Art der Verwendung ist es gegebenenfalls erforderlich z.B. die Viskosität oder andere physikalische Eigenschaften der Tinte, insbesondere solche, die einen Einfluss auf die Affinität zum jeweiligen Substrat haben, entsprechend anzupassen.

Als Beispiele für Papier, das mit den erfindungsgemässen Tinten bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Paper, Epson Glossy Film, HP Special Ink-Jet Paper, Encad Photo Gloss Paper, llford Photo Paper genannt. Kunststoff-Folien, die mit den erfindungsgemässen Tinten bedruckt werden können sind beispielsweise transparent oder mllchig/undurchsichtig. Geeignete Kunststoff-Folien sind z.B. 3M Transparency-Film.

Als textile Fasermaterialien kommen beispielsweise stickstoffhaltige oder hydroxygruppenhaltige Fasermaterialien, wie z.B. textile Fasermaterialien aus Cellulose, Seide, Wolle oder synthetischen Polyamiden, vorzugsweise Cellulose, in Betracht.

Gegenstand der vorliegenden Erfindung ist somit auch ein Verfahren zum Bedrucken von textilen Fasermaterialien, Papier oder Kunststoff-Folien, vorzugsweise textilen Fasermaterialien oder Papier und insbesondere textilen Fasermaterialien, nach dem Tintenstrahldruck-Verfahren, dadurch gekennzeichnet, dass man eine wässrige Tinte verwendet, die einen Reaktivfarbstoff der Formel (1a) enthält, wobei für die Variablen die oben angegebenen Bedeutungen und Bevorzugungen gelten.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck mittels eines Piezo-Inkjet-Kopfes. Bevorzugt ist für das erfindungsgemässe Verfahren ferner der Druck nach der kontinuierlichen Ink-Jet-Methode.

Die hergestellten Aufzeichnungen, beispielsweise Drucke, zeichnen sich insbesondere durch eine hohe Farbstärke und eine hohe Farbbrillanz sowie guten Licht- und Nassechtheitseigenschaften aus.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis von Kilogramm zu Liter.

### Beispiel 1:

a) 7,3 Teile eines Diamins der Formel H₂N-D₇₂-NH₂, worin D₇₂ einen Rest der Formel 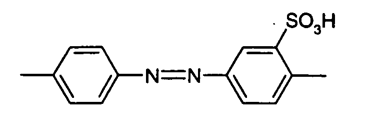 bedeutet, werden in 450 Teilen Wasser gelöst. Zu dieser Lösung gibt man zunächst 12,5 Teile einer 4N Natriumnitritlösung und tropft die erhaltene Lösung anschliessend bei 5 bis 10°C auf ein Gemisch aus 40 Teilen einer 31%igen Naphthalinsulfonsäurelösung und 50 Teilen Eis. Zur Vervollständigung der Umsetzung wird einige Stunden bei 0 bis 10°C gerührt.
b) Zu der gemäss a) erhaltenen Suspension der Tetrazoverbindung gibt man portionsweise 25,8 Teile 1-[γ-(β-Chlorethylsulfonyl)butyrylamino]-8-naphthol-3,6-disulfonsäure, worauf der pH der Reaktionsmischung zunächst mit Natriumhydrogencarbonat auf 6,4 und dann mit Natriumcarbonat auf 8,5 gestellt wird. Nach Beendigung der Reaktion wird der pH mit verdünnter Salzsäure auf 6 gestellt, das Produkt durch Zusatz von Aceton und Kaliumchlorid gefällt, der Niederschlag filtriert, mit Aceton gewaschen und getrocknet. Man erhält 14,6 Teile einer Verbindung, die in Form der freien Säure der Formel (113) 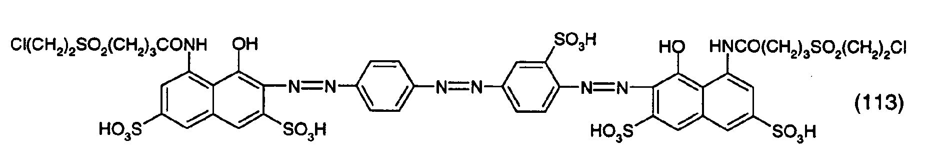 entspricht und Baumwolle und Wolle in blauem Farbton mit guten Allgemeinechtheiten färbt.

Beispiele 2 bis 9: Verfährt man wie in Beispiel 1 beschrieben, verwendet jedoch anstelle von 7,3 Teilen eines Diamins der Formel H₂N-D₇₂-NH₂ eine äquimolare eines Diamins der Formel H₂N-D_{xy}-NH₂, so erhält man eine Verbindung, die in Form der freien Säure der Formel 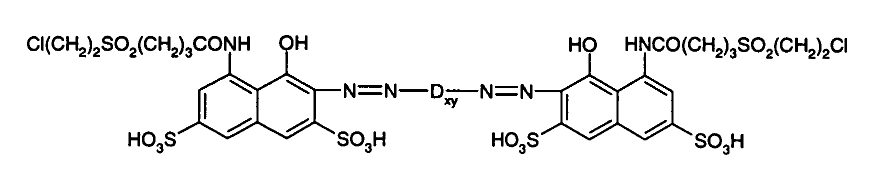 entspricht, worin D_{xy} jeweils den in Tabelle 1 aufgeführten Resten entspricht. Die Farbstoffe färben Baumwolle und Wolle in den jeweils angegebenen Farbtönen mit guten Allgemeinechtheiten.

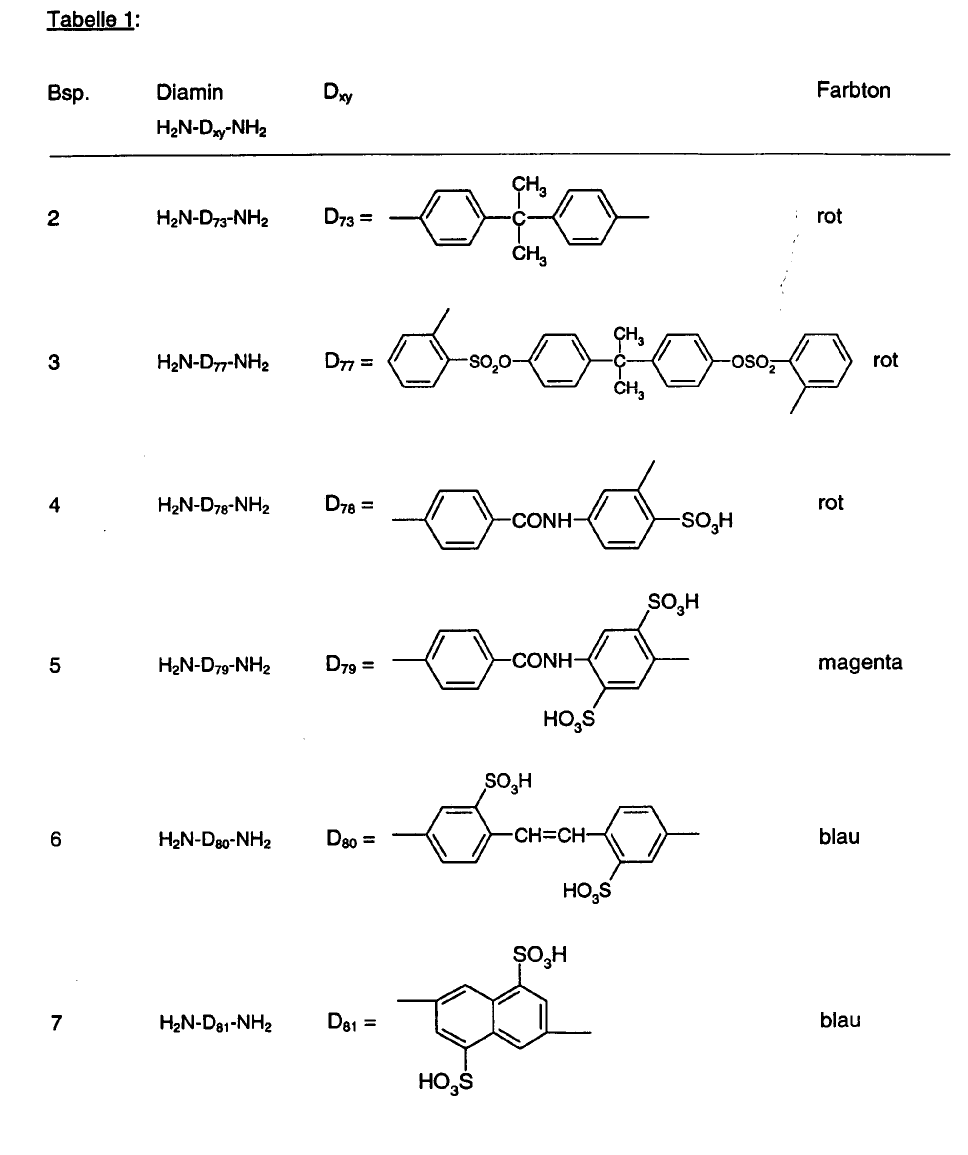

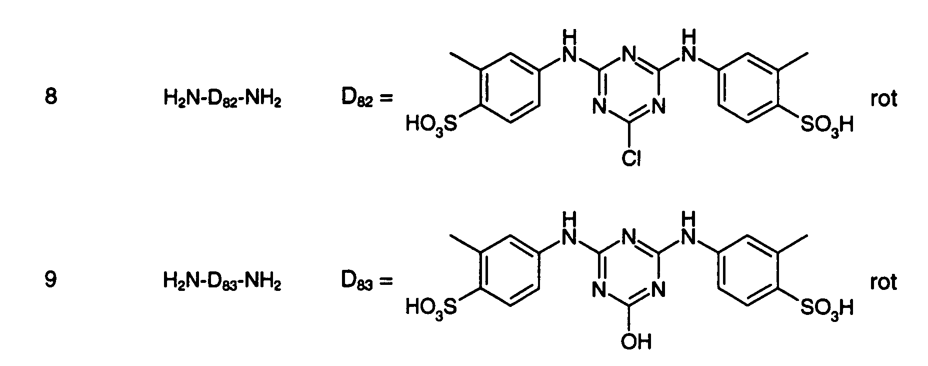

Beispiel 10: Verfährt man wie in Beispiel 1 beschrieben, verwendet jedoch anstelle von 25,8 Teilen 1-[γ-(β-Chlorethylsulfonyl)butyrylamino]-8-naphthol-3,6-disulfonsäure eine äquimolare Menge 2-[γ-(β-Chlorethylsulfonyl)butyrylamino]-5-naphthol-1,7-disulfonsäure, so erhält man eine Verbindung, die in Form der freien Säure der Formel (114) 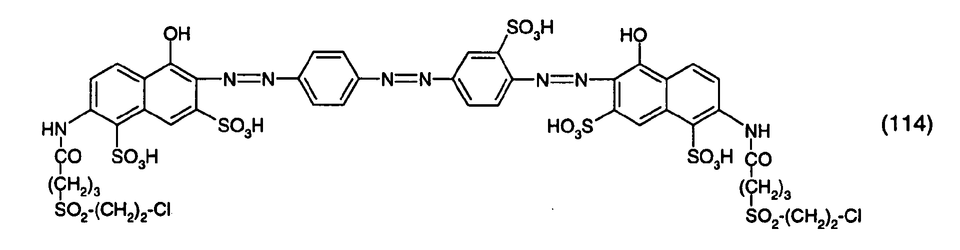 entspricht und Baumwolle und Wolle in violettem Farbton mit guten Allgemeinechtheiten färbt.

Beispiele 11 und 12: Ebenfalls in Analogie zu der in Beispiel 1 beschriebenen Vorgehensweise lassen sich die Vebindungen herstellen, die in Form der freien Säure den Formeln (116) und (117) entsprechen und Baumwolle und Wolle in den angegebenen Farbtönen mit guten Allgemeinechtheiten färben.

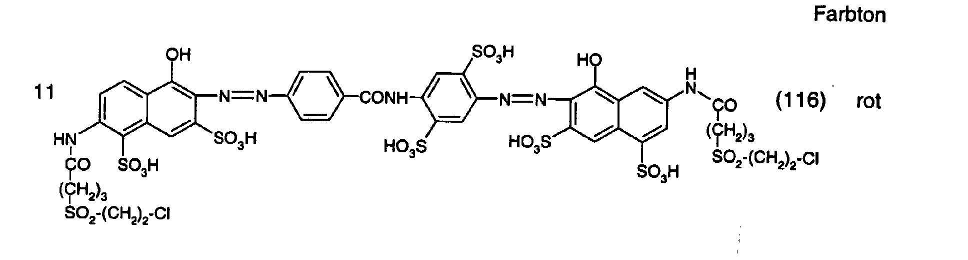

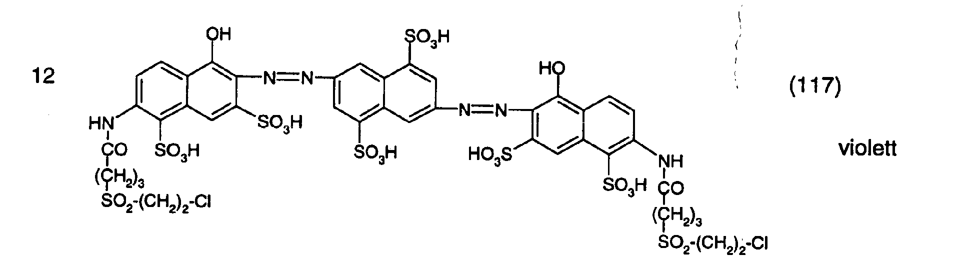

### Färbevorschrift I

In 1500 Teile eines Färbebads, welches 45 g/l Natriumchlorid und 2 Teile des gemäss Beispiel 1 erhaltenen Reaktivfarbstoffs enthält, geht man bei 60°C mit 100 Teilen Baumwollgewebe ein. Nach 45 Minuten bei 60°C werden 20 g/l kalziniertes Soda zugegeben. Man färbt weitere 45 Minuten bei dieser Temperatur. Danach wird die gefärbte Ware gespült, während einer Viertelstunde mit einem nichtionogenen Waschmittel kochend geseift, nochmals gespült und getrocknet.

Alternativ zur angegebenen Vorschrift kann anstatt bei 60°C auch bei 80°C gefärbt werden.

### Färbevorschrift II

Es werden 0,1 Teile des Farbstoffs gemäss Beispiel 1 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet.

### Druckvorschrift

3 Teile der gemäss Beispiel 1 erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfon-saures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel (1a) 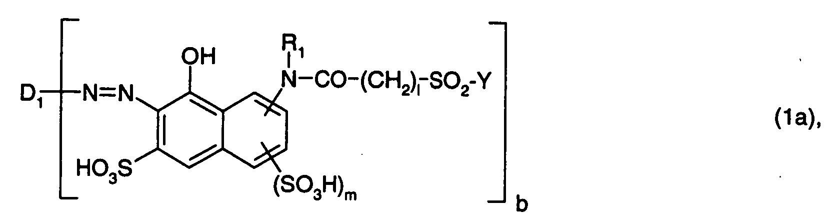 worin
b die Zahl 2 ist,
D₁ gegebenenfalls durch C₁-C₄-Alkyl, C₁-C₄-Alkoxy, C₂-C₄-Aikanoylamino, Sulfo, Halogen oder Carboxy substituiertes Phenylen oder Naphthylen oder ein Rest der Formel (13) 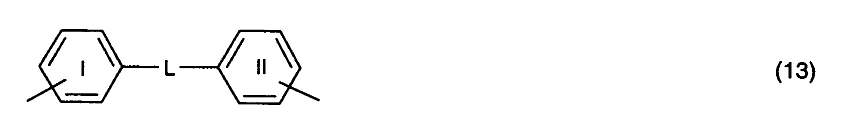 ist, worin die Benzolringe I und II gegebenenfalls durch C₁-C₄-Alkyl, C₁-C₄-Alkoxy, C₂-C₄-Alkanoylamino, Sulfo, Halogen oder Carboxy substituiert sind und L ein C₁-C₁₀-Alkylenrest ist, welcher durch 1, 2 oder 3 Sauerstoffatome unterbrochen sein kann, oder L ein Brückenglied der Formel 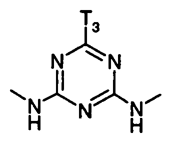 -CH=CH-, -N=N-, -NH-, -CO-, -NH-CO-, -NH-SO₂-, -NH-CO-NH-, -O-, -S- oder -SO₂- ist und T₃ für Halogen oder für einen nicht faserreaktiven Substituenten steht, oder
D₁ einen Rest der Formel (14) 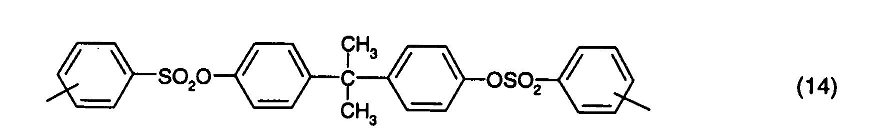 bedeutet,
R₁ Wasserstoff oder C₁-C₄-Alkyl ist,
Y Vinyl oder einen Rest -CH₂-CH₂-U bedeutet und U eine alkalisch abspaltbare Gruppe ist,
I die Zahl 2, 3, 4, 5 oder 6 bedeutet, und
m die Zahl 0 oder 1 ist.

2. Reaktivfarbstoffe gemäss Anspruch 1, **dadurch gekennzeichnet, dass**
D₁ durch 1 bis 3 Sulfogruppen substituiertes Naphthylen oder einen Rest der Formel (13) bedeutet, worin die Benzolringe I und II gegebenenfalls durch 1 oder 2 Substituenten aus der Gruppe Sulfo, Carboxy, Methyl und Methoxy substituiert sind und L ein C₂-C₄-Alkylenrest oder ein Brückenglied der Formel -CH=CH-, -N=N-, -NH-, -CO-, -NH-CO-, -NH-SO₂-,
-NH-CO-NH-, -O-, -S- oder -SO₂- ist, oder
D₁ ein Rest der Formel (14) bedeutet.

3. Reaktivfarbstoffe gemäss einem der Ansprüche 1 und 2, **dadurch gekennzeichnet, dass** D₁ durch 2 Sulfogruppen substituiertes Naphthylen oder einen Rest der Formel (13) bedeutet, worin die Benzolringe I und II gegebenenfalls durch 1 oder 2 Substituenten aus der Gruppe Sulfo, Carboxy, Methyl und Methoxy substituiert sind und L einen C₂-C₄-Alkylenrest oder ein Brückenglied der Formel -CH=CH-, -N=N- oder -NH-CO- ist, oder D₁ ein Rest der Formel (14) bedeutet.

4. Reaktivfarbstoffe gemäss einem der Ansprüche 1 bis 3, **dadurch gekennzeichnet, dass** I für die Zahl 3 oder 4, insbesondere 3, steht.

5. Reaktivfarbstoffe gemäss einem der Ansprüche 1 bis 4, **dadurch gekennzeichnet, dass** m die Zahl 1 ist.

6. Verfahren zur Herstellung eines Reaktivfarbstoffs der Formel (1a), **dadurch gekennzeichnet, dass** man
in etwa ein Moläquivalent eines tetrazotierten Diamins der Formel (18)
H₂N-D₁-NH₂ (18)
auf in etwa zwei Moläquivalente einer Verbindung der Formel (17) 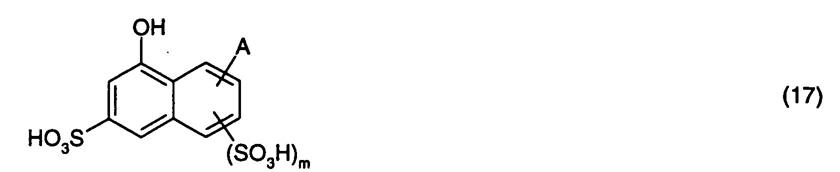 kuppelt, wobei A den Rest der Formel (2) 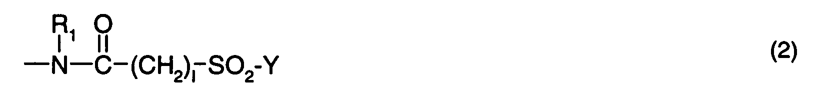 bedeutet und für D₁, R₁, I und m die Bedeutungen gemäss Anspruch 1 gelten.

7. Verwendung von Reaktivfarbstoffen gemäss einem der Ansprüche 1 bis 5 bzw. der gemäss Anspruch 6 erhaltenen Reaktivfarbstoffe zum Färben oder Bedrucken von hydroxylgruppenhaltigen oder stickstoffhaltigen Fasermaterialien.

8. Verwendung gemäss Anspruch 7, **dadurch gekennzeichnet, dass** man cellulosehaltige Fasermaterialien, insbesondere baumwollhaltige Fasermaterialien, färbt oder bedruckt.

9. Wässrige Tinten, **dadurch gekennzeichnet, dass** sie
einen Reaktivfarbstoff der Formel (1a) gemäss Anspruch 1 enthalten.

10. Verfahren zum Bedrucken von textilen Fasermaterialien, Papier oder Kunststoff-Folien nach dem Tintenstrahldruck-Verfahren, **dadurch gekennzeichnet, dass** man eine wässrige Tinte gemäss Anspruch 9 verwendet.
